# EUROPÄISCHE PATENTSCHRIFT

(11) **EP 0 947 398 B1**
(45) Veröffentlichungstag und Bekanntmachung des Hinweises auf die Patenterteilung: **03.09.2003**
(21) Anmeldenummer: 99105370.3
(22) Anmeldetag: 16.03.1999
(51) Int. Cl.: B60R 21/32

(54) **Verfahren und Vorrichtung zur Auslösung eines Airbags mit Sitzpositionserkennung**
Method and apparatus for inflating an airbag with seat position recognizing means
Méthode et appareil pour le déploiement d'un airbag avec reconnaissance de position du conducteur sur le siège

(30) Priorität: 03.04.1998 DE 19815037
(43) Veröffentlichungstag der Anmeldung: 06.10.1999
(73) Patentinhaber: Volkswagen Aktiengesellschaft, 38436 Wolfsburg (DE)
(72) Erfinder: Zander, André, 38820 Halberstadt (DE); Mai, Rudolf, 38442 Wolfsburg (DE); Sinnhuber, Ruprecht, Dipl.-Ing., 38518 Gifhorn (DE)

(56) Entgegenhaltungen:
- WO-A-94/22693
- WO-A-97/09639
- DE-A- 4 023 109

## Beschreibung

Die Erfindung betrifft ein Verfahren und eine Vorrichtung zur Auslösung eines Airbags mit Sitzpositionserkennung.

Ein Airbag entfaltet dann seine optimale Wirkung, wenn der Fahrzeuginsasse unmittelbar vor einem Frontalzusammenstoß eine normale Haltung im Fahrzeugsitz einnimmt. Tritt der Fall ein, daß der Fahrzeuginsasse in der gegebenen Situation sich beispielsweise gerade nach vome zur Armaturentafel vorbeugt, so kann es aufgrund des geringen Abstandes zu dem zunächst zusammengefalteten Airbag bei dessen explosionsartiger Entfaltung gegebenenfalls zu schwerwiegenden Verletzungen kommen.

Zur Vermeidung dieser Probleme ist aus der DE 38 09 074 bekannt, den Airbag, der vollständig oder nur teilweise füllbar ist, mit einer Steuerschaltung mit zugeordneten Sitzplatzpositionssensoren auszubilden. In Abhängigkeit von den erfaßten Sitzpositionen der Sensoren wird der Airbag dann entweder vollständig oder nur teilweise aufgeblasen. Die Sensoren können dabei entweder als Kamera, IR-Sensoren, Ultraschallsensoren oder ähnliche Sensoren ausgebildet sein. Des weiteren sind auch Sensoranordnungen bekannt, die separat Fuß-, Körper- und Kopfstellung erfassen und aus den Einzelergebnissen auf die Sitzposition schließen.

Ein solches Verfahren zur angepaßten Auslösung eines Airbags an die Unfallsituation ist beispielsweise aus der DE 195 46 297 bekannt. Das Airbagsystem weist dabei eine Steuereinheit auf, die das Airbagsystem aufgrund von elektrischen Signalen eines im Kraftfahrzeug vorgesehenen Beschleunigungssensors aktiviert. Weiter sind Sensorelemente vorgesehen, durch die Parameter erfaßt werden, die die individuelle kinetische Energie des Fahrzeuginsassen bestimmen. Die Sensorelemente übergeben elektrische Signale, die diese Parameter repräsentieren, an eine mit der Steuereinheit verbundene Auswerteelektronik, in welcher aufgrund dieser Signale ein Zeitpunkt t₄ errechnet wird, zu welchem der Fahrzeuginsasse voraussichtlich den aufgeblasenen Airbag berühren wird, wobei die Auswerteelektronik aufgrund des errechneten Zeitpunktes t₄ einen davor liegenden Zeitpunkt t₂, zu welchem das Aufblasen des Airbags beginnen soll, errechnet und an die Steuereinheit weitergibt, welche zum Zeitpunkt t₂ das Aufblasen des Airbags auslöst. Zusätzlich zu den bereits bekannten Parametern wird vorgeschlagen, auch neben und hinter dem Fahrzeugsitz befindliche Personen zu berücksichtigen. Des weiteren wird auch die Kopfaufprallgeschwindigkeit errechnet und miteinbezogen.

Aus der DE 40 23 109 ist ein Verfahren zum Auslösen von Insassenschutzvorrichtungen bekannt, wobei die Sitzposition der Insassen in Relation zu den zugehörigen Insassenschutzrechtsvorrichtungen quasi-permanent sensiert wird. Dazu sind eine Vielzahl von Sensoren in der Fahrgastzelle um den Insassen herum angeordnet. Aus den daraus gewonnenen Daten werden dann Zeitpunkte und der Umfang der einzuleitenden Schutzmaßnahmen abgeleitet.

Weiterhin ist aus der WO-A-94/22693 ein Airbag-System bekannt, bei dem durch mehrere Sensoren die Sitzposition eines Fahrers sensiert wird. Falls erkannt wird, dass der Fahrer eine Sitzposition innehat, bei der eine Verletzungsgefahr für den Fahrer besteht, so wird die Airbagfunktion außer Betrieb gesetzt oder entsprechend verzögert. Zusätzlich können die Sensoren zur Konzentrationsüberwachung des Fahrers eingesetzt werden.

Die WO-A-97/09639 offenbart ein Airbag-System, wobei eine Vielzahl von Ultraschallsensoren zur Erfassung der Sitzposition bzw. der Kontur des Fahrers vorgesehen ist, um in Abhängigkeit von den so erfaßten Daten den Airbag außer Betrieb zu setzen oder den Innendruck des Airbags zu vermindern. In einer bevorzugten Ausgestaltung wird die Wiederholfrequenz der Sendebursts der Ultraschallsensoren an die jeweilige Situation angepasst, so dass zum Beispiel unmittelbar vor oder während eines Unfalls die Wiederholfrequenz erhöht wird, um die sich schnell verändemde Kopfposition des Fahrers erfassen zu können.

Nachteilig an den bekannten Verfahren und Vorrichtungen ist, daß aufgrund der permanenten Sensierung die Fahrzeuginsassen mit der jeweiligen Strahlung der verwendeten Sensoren belastet werden. Aufgrund dieser Tatsache sind darüber hinaus bestimmte Sensoren auch nicht verwendbar, wie beispielsweise Laser-Sensoren. Des weiteren reduziert der permanente Betrieb der Sensorik deren Lebensdauer und belastet das Bordnetz.

Der Erfindung liegt daher das technische Problem zugrunde, ein Verfahren und eine Vorrichtung zur Auslösung eines Airbags mit Sitzpositionserkennung zu schaffen, mittels derer bei gleichem Sicherheitsstandard die Strahlenbelastung der Fahrzeuginsassen reduziert und die Lebensdauer der Sensorik erhöht wird.

Die Lösung des technischen Problems ergibt sich durch die Merkmale der Patentansprüche 1 und 3. Durch die Sensierung eines erfaßten Objektes ausschließlich im Aufblasbereich des Airbags trifft die Strahlung des Sensors zur Erfassung der Sitzposition nur auf eine beschränkte Körperpartie des Fahrzeuginsassen, was deren Strahlungsbelastung erheblich reduziert. Erst bei der Signalisierung des Precrash-Sensors wird dann kurz vor der Auslösung des Airbags das Objekt vollständig sensiert. Unter Precrashsensor soll dabei ein Sensor verstanden werden, der eine bevorstehende Kollision mit einem Hindernis oder einen Crash in einem Frühstadium erkennt. Dies erlaubt, je nach Bauart des Sensors, diesen im Normalbetrieb mit einer geringeren Taktfrequenz oder einem geringeren Scanbereich zu betrieben werden, da nur ein beschränkter Bereich sensiert werden muß, was zu einer geringeren Beanspruchung der Sensorik und des Airbagsteuergerätes führt. Weitere vorteilhafte Ausgestaltungen der Erfindung ergeben sich aus den Unteransprüchen.

Bei einer Ausbildung mit mehreren Sensoren reicht es daher aus, vor einer Signalisierung des Precrash-Sensors lediglich mit einem Sensor den Aufblasbereich zu sensieren und die anderen bis zur Signalisierung durch den Precrash-Sensor zu deaktivieren.

Die Erfindung wird nachfolgend anhand eines bevorzugten Ausführungsbeispiels näher erläutert. Die einzige Figur zeigt eine schematische Seitenansicht einer Fahrgastzelle.

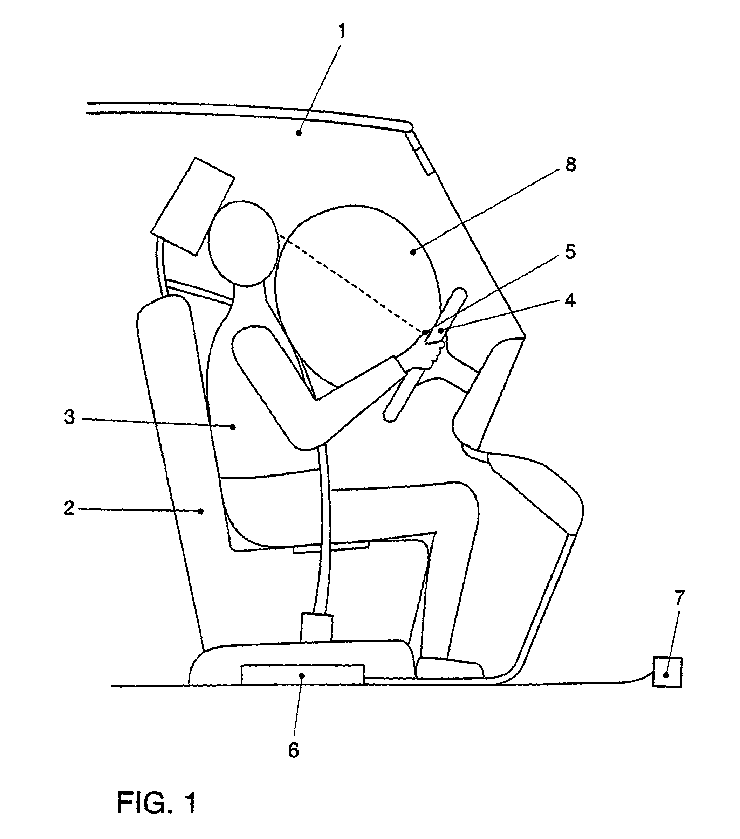

In der Fig. 1 ist eine Seitenansicht einer Fahrgastzelle 1 eines Kraftfahrzeuges dargestellt, wobei auf einem Fahrzeugsitz 2 ein Kraftfahrzeugführer 3 sitzt. Im Lenkrad 4 ist ein Sensor 5 zur Erkennung der Sitzposition des Kraftfahrzeugführers 3 angeordnet. Der Sensor 5 ist beispielsweise als iR-Laser-Scanner ausgebildet. Im Kraftfahrzeug ist weiter ein Airbagsteuergerät 6 angeordnet, das mit einem Precrash-Sensor 7 elektrisch verbunden ist. Das Airbagsteuergerät 6 ist ebenso mit dem Sensor 5 verbunden.

Nachdem der Kraftfahrzeugführer 3 eingestiegen ist, was beispielsweise mittels eines nicht dargestellten Türsensors erfaßt wird, erfaßt der Sensor 5, ob der Fahrzeugsitz 2 belegt ist. Erfaßt der Sensor 5 ein Objekt auf dem Fahrzeugsitz 2, so wird dieses Objekt mittels Referenzdaten des Airbagsteuergerätes 6 klassifiziert. Diese Klassifizierung beinhaltet beispielsweise das Erkennen eines lebenden Objektes, dessen Größe, Gewicht und ähnliches, was für die Auslösung des Airbags von Relevanz ist. Dazu scannt der Sensor 5 kurzzeitig den gesamten Fahrzeugsitz 2 ab. Anschließend schaltet das Airbagsteuergerät 6 den Sensor 5 in einen stand-by-Modus, in dem der Sensor 5 ausschließlich den Aufblasbereich 8 des Airbags sensiert. Diese Sensierung kann kontinuierlich oder diskontinuierlich erfolgen. Erfolgt während der Sensierung eine relevante Änderung im Aufblasbereich 8, so wird dies als Vorabinformation vom Airbagsteuergerät 6 berücksichtigt, um bei einer Unfallsituation möglichst schnell den Airbag gezielt auszulösen. Zur Sicherheit ist es darüber hinaus möglich, periodisch den gesamten relevanten Bereich des Fahrzeugsitzes 2 emeut abzuscannen. Der Precrash-Sensor 7, der beispielsweise als Beschleunigungssensor ausgebildet ist, erzeugt kurz vor einem Unfall ein Signal, das an das Airbagsteuergerät 6 übertragen wird. Das Airbagsteuergerät 6 steuert daraufhin den Sensor 5 an, so daß dieser den gesamten relevanten Bereich sensiert und die zugehörigen Daten an das Airbagsteuergerät 6 übermittelt. Anhand dieser Daten errechnet das Airbagsteuergerät 6 den optimalen Zündimpuls für den Airbag, so daß dieser den Fahrzeuginsassen 3 nicht verletzt. Anstelle des einen Sensors 5, dessen Abtastbereich variierbar ausgebildet ist, können auch mehrere Sensoren 5 verwendet werden, die dann situationsbedingt zu - oder abschaltbar sind.

## Patentansprüche

1. Verfahren zur Auslösung eines Airbags mit Sitzpositionserkennung, mittels eines Precrash-Sensors (7) und mindestens eines Sensors (5) zur Erkennung der Sitzposition, umfassend folgende Verfahrensschritte:
a) Erfassen der Sitzbelegung eines Fahrzeugsitzes (2) mittels des Sensors (5), wenn der Sensor (5) ein Objekt auf dem Fahrzeugsitz erfaßt weiterhin:
b) Scannen des gesamten Fahrzeugsitzes (2) mittels des Sensors (5);
c) Klassifizieren eines möglichen erfaßten Objektes (3) auf dem Fahrzeugsitz (2) anhand der durch das Scannen erfassten Daten aus Verfahrensschritt b);
d) Sensieren des Objektes (3) ausschließlich im Aufblasbereich des Airbags,
e) Auswerten von relevanten Änderungen des Objektes (3) im Aufblasbereich (8) des Airbags, und
f) vollständige Sensierung des Objektes bei einer Signalisierung des Precrash-Sensors (7).

2. Verfahren nach Anspruch 1, **dadurch gekennzeichnet, daß** das erfaßte Objekt periodisch kurzzeitig vollständig sensiert wird.

3. Vorrichtung zur Auslösung eines Airbags (8) mit Sitzpositionserkennung, umfassend ein Airbagsteuergerät (6), einen Precrash-Sensor (7) und mindestens einen Sensor (5) zur Erkennung der Sitzposition, wobei der mindestens eine Sensor (5) zur Erkennung der Sitzposition einen veränderbaren Abtastbereich aufweist, wobei der Abtastbereich in Abhängigkeit des Precrash-Sensors (7) umschaltbar ist von einem Abtastbereich ausschließlich in einem Aufblasbereich (8) des Airbags zu einem Abtastbereich, der das auf dem Fahrzeugsitz befindliche Objekt vollständig sensiert.

4. Vorrichtung nach Anspruch 3, **dadurch gekennzeichnet, daß** die Vorrichtung mehrere Sensoren (5) zur Erkennung der Sitzposition umfaßt, die zum Verändern des Abtastbereichs der mehreren Sensoren (5) wahlweise durch das Airbagsteuergerät (6) und/oder den Precrash-Sensor (7) ansteuerbar sind.

## Claims

1. Method for triggering an airbag with seat position detection, by means of a precrash sensor (7) and at least one sensor (5) for detecting the seat position, comprising the following method steps:
a) sensing of the occupation of a vehicle seat (2) by means of the sensor (5) if the sensor (5) senses an object on the vehicle seat, furthermore
b) scanning of the entire vehicle seat (2) by means of the sensor (5),
c) classification of a possible sensed object (3) on the vehicle seat (2) by means of the data sensed by means of the scanning in method step b),
d) sensing of the object (3) exclusively in the inflation region of the airbag,
e) evaluation of relevant changes in the object (3) in the inflation region (8) of the airbag, and
f) complete sensing of the object in the case of signalling by the precrash sensor (7).

2. Method according to Claim 1, **characterized in that** the sensed object is periodically sensed completely for a short time.

3. Device for triggering an airbag (8) with seat position detection, comprising an airbag controller (6), a precrash sensor (7) and at least one sensor (5) for detecting the seat position, the at least one sensor (5) for detecting the seat position having a variable scanning region, it being possible to switch over the scanning region as a function of the precrash sensor (7) from a scanning region exclusively in an inflation region (8) of the airbag to a scanning region which completely senses the object located on the vehicle seat.

4. Device according to Claim 3, **characterized in that** the device comprises a plurality of sensors (5) for detecting the seat position, which sensors can optionally be driven by the airbag controller (6) and/or the precrash sensor (7) in order to change the scanning region of the plurality of sensors (5).

## Revendications

1. Procédé de déploiement d'un airbag avec reconnaissance de position du conducteur sur le siège, au moyen d'un capteur de pré-collision (7) et d'au moins un capteur (5) pour reconnaître la position du conducteur sur le siège, comprenant les étapes de procédé suivantes :
a) détection de l'occupation du siège d'un siège de véhicule (2) au moyen du capteur (5) lorsque le capteur (5) détecte un objet sur le siège du véhicule, et
b) balayage de l'ensemble du siège du véhicule (2) au moyen du capteur (5) ;
c) classification d'un objet détecté possible (3) sur le siège du véhicule (2) à l'aide des données détectées par le balayage dans l'étape de procédé b) ;
d) détection de l'objet (3) exclusivement dans la région de gonflage de l'airbag ;
e) analyse des modifications appropriées de l'objet (3) dans la région de gonflage (8) de l'airbag, et
f) détection complète de l'objet lors d'une signalisation par le capteur de pré-collision (7).

2. Procédé selon la revendication 1, **caractérisé en ce que** l'objet détecté est brièvement périodiquement détecté complètement.

3. Dispositif de déploiement d'un airbag (8) avec reconnaissance de position du conducteur sur le siège, comprenant un appareil de commande d'airbag (6), un capteur de pré-collision (7) et au moins un capteur (5) pour reconnaître la position du conducteur sur le siège, dans lequel l'au moins un capteur (5) pour reconnaître la position du conducteur sur le siège présente une zone de détection variable, la zone de détection pouvant varier en fonction du capteur de pré-collision (7) d'une région de détection exclusivement dans une région de gonflage (8) de l'airbag à une région de détection qui détecte complètement l'objet se trouvant sur le siège du véhicule.

4. Dispositif selon la revendication 3, **caractérisé en ce que** le dispositif comprend plusieurs capteurs (5) pour reconnaître la position du conducteur sur le siège, qui peuvent être commandés pour faire varier la région de détection des plusieurs capteurs (5) au choix par l'appareil de commande d'airbag (6) et/ou le capteur de pré-collision (7).
